# EUROPÄISCHE PATENTANMELDUNG

(11) **EP 4 438 528 A1**
(43) Veröffentlichungstag der Anmeldung: **02.10.2024**
(21) Anmeldenummer: 24164051.5
(22) Anmeldetag: 18.03.2024
(51) Int. Cl.: B65G 17/00, B65G 47/71

(54) **TRAGPLATTENLINIENVERTEILER ZUM VERTEILEN VON FÖRDERGUT VON EINER SPUR AUF MEHRERE SPUREN**

(30) Priorität: 30.03.2023 DE 102023108172
(71) Anmelder: MULTIVAC Sepp Haggenmüller SE & Co. KG, 87787 Wolfertschwenden (DE)
(72) Erfinder: BEHR, Markus, 87488 Betzigau (DE)
(74) Vertreter: Grünecker Patent- und Rechtsanwälte PartG mbB

(57) **Zusammenfassung**

Tragplattenlinienverteiler (100) zum Verteilen von Fördergut von einer Spur (141) auf mehrere Spuren(142, 143), der Tragplattenlinienverteiler (100) umfassend einen Fördergurt (101) und wenigstens eine auf dem Fördergurt angeordnete und quer zu einer Förderrichtung (T) des Fördergurts beweglich angeordnete Tragplatte (120), wobei der Fördergurt (101) ein quer zur Förderrichtung verlaufendes Führungselement (111) umfasst und die Tragplatte (120) ein Kontaktelement (121) umfasst, das mit dem Führungselement (111) in berührendem Kontakt ist, wobei das Kontaktelement (121) und das Führungselement (111) so ausgestaltet sind, dass die Tragplatte (12) zumindest teilweise über eine Begrenzung des Fördergurtes (101) hinaus quer zur Förderrichtung (T) verschoben werden kann.

## Beschreibung

Die vorliegende Erfindung betrifft einen Tragplattenlinienverteiler zum Verteilen von Fördergut von einer Spur auf mehrere Spuren gemäß Anspruch 1 sowie ein Verfahren zum Verteilen von Fördergut von einer Spur auf mehrere Spuren gemäß Anspruch 15.

### Stand der Technik

Tragplattenlinienverteiler sind aus dem Stand der Technik bekannt. Diese umfassen üblicherweise einen Fördergurt und einen Antriebsgurt oder ähnliche Mittel zum Antreiben des Fördergurtes in Förderrichtung. Der Fördergurt umfasst weiterhin eine oder mehrere Tragplatten, die quer zum Fördergurt verschiebbar sind, sodass mit den Tragplatten transportiertes Fördergut von einem einspurigen Transport auf mehrere Spuren bzw. Gassen bspw. im Bereich einer Weiche verteilt werden kann.

Der verfügbare Bewegungsraum bzw. die Bewegungsamplitude der Tragplatten gesehen von der Mitte des Fördergurtes aus quer zur Förderrichtung des Fördergurtes ist jedoch durch die Abmessungen des Fördergurtes und/oder die Abmessungen des Antriebsgurtes beschränkt, sodass die Anzahl der möglichen Spuren, auf die das Fördergut verteilt werden kann, begrenzt ist und daher für das Erhöhen der Anzahl der Spuren eine Verbreiterung des Fördergurtes und damit eine Erhöhung des Gewichts des Fördergurtes erforderlich macht.

### Aufgabe

Ausgehend vom bekannten Stand der Technik besteht die zu lösende technische Aufgabe somit darin, einen Tragplattenlinienverteiler zum Verteilen von Fördergut von einer Spur auf mehrere Spuren sowie ein Verfahren zum Verteilen von Fördergut von einer Spur auf mehrere Spuren anzugeben, die eine möglichst hohe Anzahl von Spuren quer zur Förderrichtung des Fördergurts bei gleichzeitig geringer Masse des Fördergurts realisieren.

### Lösung

Diese Aufgabe wird erfindungsgemäß durch den Tragplattenlinienverteiler zum Verteilen von Fördergut von einer Spur auf mehrere Spuren gemäß Anspruch 1 sowie das Verfahren zum Verteilen von Fördergut von einer Spur auf mehrere Spuren gemäß Anspruch 15 gelöst. Vorteilhafte Weiterbildungen der Erfindung sind in den Unteransprüchen erfasst.

Der erfindungsgemäße Tragplattenlinienverteiler zum Verteilen von Fördergut von einer Spur auf mehrere Spuren umfasst einen Fördergurt und wenigstens eine auf dem Fördergurt angeordnete und quer zu einer Förderrichtung des Fördergurts beweglich angeordnete Tragplatte, wobei der Fördergurt ein quer zur Förderrichtung verlaufendes Führungselement umfasst und die Tragplatte ein Kontaktelement umfasst, das mit dem Führungselement in berührendem Kontakt ist, wobei das Kontaktelement und das Führungselement so ausgestaltet sind, dass die Tragplatte zumindest teilweise über eine Begrenzung des Fördergurtes hinaus quer zur Förderrichtung verschoben werden kann.

Auf der Tragplatte kann Fördergut abgelegt und somit durch die Bewegung der Tragplatte quer zur Förderrichtung auf die verschiedenen Spuren verteilt werden.

Der Fördergurt kann bspw. entlang seiner Begrenzung (die gesehen in Förderrichtung den Fördergurt links und/oder rechts begrenzt) mit einem Antriebsgurt verbunden sein, der den Fördergurt antreibt. Das Kontaktelement kann bspw. mit dem Führungselement in Anlage gebracht sein, sodass eine Bewegung der Tragplatte durch die Wechselwirkung zwischen Kontaktelement und Führungselement derart begrenzt wird, dass die Tragplatte nur quer zur Förderrichtung des Fördergurtes relativ zum Fördergurt beweglich ist.

Durch den erfindungsgemäßen Tragplattenlinienverteiler kann die Tragplatte quer zum Fördergurt derart verschoben werden, dass sie auch über die Begrenzung des Fördergurts hinaus bewegt werden kann, was den möglichen Bewegungsspielraum der Tragplatte über die Abmessungen des Fördergurtes hinaus vergrößert. Der Fördergurt kann daher in einer Richtung quer zur Förderrichtung bei gleichbleibender Anzahl Spuren schmaler konstruiert werden oder bei einer größeren Anzahl von Spuren ein schmalerer Fördergurt verwendet werden.

Das Kontaktelement kann das Führungselement zumindest teilweise umgreifen. Beispielsweise kann das Kontaktelement bei Ausgestaltung des Führungselements mit einem runden Querschnitt quer zur Transportrichtung als C-förmiges Profil ausgebildet sein, dass das Führungselement teilweise umgreift. Ein sicherer Halt der Tragplatte wird hiermit gewährleistet.

Es kann vorgesehen sein, dass das Führungselement ein Rohr ist oder ein Rohr umfasst. Das Rohr kann insbesondere ein Hohlrohr sein und aus einem leichten aber bevorzugt im Bereich der Lebensmittelindustrie einsetzbaren Material, wie bspw. Kunststoff oder Edelstahl bestehen oder eine äußere Beschichtung daraus umfassen. Das Rohr kann zumindest an seinen Enden abgedichtet sein, sodass ein Eindringen von Verunreinigungen verhindert wird. Hierdurch wird eine leichtere Ausgestaltung des Fördergurts erreicht.

In einer Ausführungsform ist der Fördergurt an der Begrenzung mit einem Antriebsgurt ist und die Tragplatte kann über die Begrenzung des Fördergurtes hinaus quer zur Förderrichtung so verschoben werden, dass die Tragplatte sich zumindest teilweise in einen durch den Antriebsgurt begrenzten Bereich erstreckt.

Der Antriebsgurt kann gesehen in einer Richtung senkrecht zur Transportebene entlang des Fördergurts auf gleicher Höhe oder verschiedener Höhe wie der Fördergurt selbst sein. Durch geeignete Ausgestaltung des Kontaktelements kann die Bewegung der Tragplatte in den Bereich des Antriebsgurts erreicht werden, wobei der durch den Antriebsgurt begrenzte Bereich ein Volumen des Antriebsgurts sowie ein Volumen oberhalb des Antriebsgurts umfassen kann. Die zur Verfügung stehende Fläche quer zur Förderrichtung zum Bewegen der Tragplatten wird hiermit erhöht, was eine kompaktere Ausgestaltung des Tragplattenlinienverteilers erlaubt.

Es kann vorgesehen sein, dass der Antriebsgurt eine größere Ausdehnung in einer Richtung senkrecht zu einer Förderebene des Fördergurtes aufweist als der Fördergurt und dass das Kontaktelement eine Ausdehnung in der Richtung aufweist, die größer als die Ausdehnung des Antriebsgurts ist. Mit dieser Ausgestaltung des Kontaktelements kann die Bewegung der Tragplatte auch in dem Bereich, der von dem Antriebsgurt begrenzt wird, erreicht werden.

Das Kontaktelement kann eine Ausdehnung quer zur Förderrichtung aufweisen, die kleiner als eine Ausdehnung der Tragplatte quer zur Förderrichtung ist und/oder das Kontaktelement kann eine Ausdehnung quer zur Förderrichtung aufweisen, die wenigstens 20% oder wenigstens 30% oder wenigstens 50% einer Ausdehnung der Tragplatte quer zur Förderrichtung beträgt. Mit dieser Ausgestaltung des Kontaktelements wird ein sicheres Bewegen der Tragplatte erreicht und verhindert, dass sich die Tragplatte relativ zur Förderrichtung dreht.

Der Fördergurt und/oder das Führungselement können ein Sperrelement umfassen, das eine Bewegung der Tragplatte quer zur Förderrichtung und gesehen von einer Mitte des Fördergurtes aus über das Sperrelement hinaus blockiert. Hierdurch wird verhindert, dass die Tragplatte über den vorgesehenen Bewegungsbereich quer zur Förderrichtung hinaus versetzt wird, was zu Beeinträchtigungen des Betriebs führen könnte.

Die Tragplatte kann einen Tragplattenkörper und ein auf einer von dem Fördergurt wegweisenden Oberfläche des Tragplattenkörpers angeordnetes Reibelement umfassen. Ein zuverlässiges Transportieren des Förderguts kann hiermit erreicht werden.

Das Reibelement kann eine Fläche in einer Ebene parallel zu einer Förderebene des Fördergurtes aufweist, die wenigsten 50% oder wenigstens 75% oder wenigstens 85% der Oberfläche des Tragplattenkörpers, auf der das Reibelement angeordnet ist, beträgt. Mit dieser Ausführungsform steht eine möglichst große Fläche der Tragplatte für das Befördern von Fördergut zur Verfügung.

Es kann vorgesehen sein, dass das Reibelement und der Tragplattenkörper über eine formschlüssige und/oder materialschlüssige Verbindung miteinander verbunden sind. Eine Ablagerung von Verunreinigungen wird durch diese Ausführungsform vermieden.

In einer Ausführungsform ist vorgesehen, dass die Verbindung eine permanente Verbindung oder eine lösbare Verbindung ist. Eine permanente Verbindung kann einen verbesserten Schutz gegenüber Verunreinigungen bieten. Eine lösbare Verbindung erlaubt bspw. einen Austausch des Reibelements aufgrund von Verschleiß, ohne dass hierbei die gesamte Tragplatte ausgetauscht werden muss, was den ökologischen Fußabdruck des Tragplattenlinienverteilers verbessert.

Die Tragplatte kann ein zweites Führungselement umfassen und der Tragplattenlinienverteiler kann eine Führung zum Führen der wenigstens einen Tragplatte mittels des zweiten Führungselements umfassen, wobei die Führung einen einspurigen Bereich und einen in Förderrichtung stromab angeordneten mehrspurigen Bereich umfasst und die Tragplatte von dem einspurigen Bereich in eine Spur des mehrspurigen Bereichs verteilt werden kann. Mit dieser Ausgestaltung kann ein Aufteilen von Tragplatten auf mehrere Spuren erreicht werden.

Ein Abstand einer gesehen von einer Mitte des Fördergurts aus äußersten Spur des mehrspurigen Bereichs zu einer Begrenzung des Fördergurts in einer Richtung quer zur Förderrichtung kann kleiner als die Hälfte der Ausdehnung der Tragplatte in der Richtung quer zur Förderrichtung sein. Mit dieser Ausgestaltung wird ein möglichst großer Teil der Fläche des Fördergurts genutzt, um die Tragplatten auf Spuren zu verteilen, was entweder eine kompaktere Ausgestaltung des Fördergurts erlaubt oder bei gleichbleibender Größe des Fördergurts quer zur Transportrichtung eine erhöhte Anzahl von Spuren realisieren kann.

Es kann vorgesehen sein, dass das zweite Führungselement mit dem Kontaktelement verbunden oder an dem Kontaktelement angeordnet ist. Diese Ausgestaltung ist konstruktiv einfach.

Erfindungsgemäß ist ein Verfahren zum Verteilen von Fördergut von einer Spur auf mehrere Spuren mit einem Tragplattenlinienverteiler gemäß einer der vorangegangenen Ausführungsformen vorgesehen, das Verfahren umfassend ein Transportieren von Fördergut auf der Tragplatte und ein Verschieben der Tragplatte quer zur Förderrichtung des Fördergurtes, um das Fördergut von einer Spur auf eine der mehreren Spuren zu verteilen. Dieses Verfahren erlaubt ein Aufteilen von Tragplatten auf eine Vielzahl von Spuren bei reduzierter Ausdehnung des Fördergurts quer zur Förderrichtung.

Sämtliche beschriebenen Ausführungsformen sind einzeln oder in beliebiger Kombination kombinierbar.

### Kurze Beschreibung der Figuren

- Fig. 1: zeigt einen Tragplattenlinienverteiler gemäß einer Ausführungsform.
- Fig. 2 und 3: zeigen Ausführungsformen einer Tragplatte und eines Führungselements.
- Fig. 4: zeigt eine Schnittansicht senkrecht zur Transportrichtung durch einen Tragplattenlinienverteiler gemäß einer Ausführungsform.

### Ausführliche Beschreibung

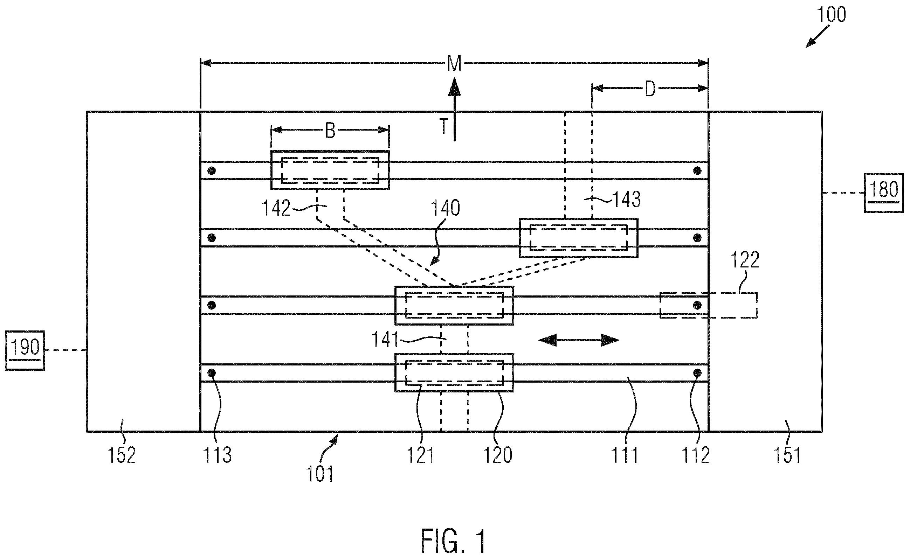

Figur 1 zeigt einen Tragplattenlinienverteiler 100 gemäß einer Ausführungsform. Tragplattenlinienverteiler werden grundsätzlich eingesetzt, um Fördergut (hier nicht dargestellt) mit Hilfe einer oder mehrerer Tragplatten 120 entlang einer Förderrichtung T aus einem einreihigen Transport auf einen mehrreihigen Transport quer zur Förderrichtung zu verteilen. Dies ist hier schematisch dargestellt durch die zwei in Transportrichtung stromauf in derselben Position quer zur Förderrichtung T dargestellten Tragplatten 121 und die dazu quer zur Förderrichtung verschobenen Tragplatten in Förderrichtung T stromab.

Der Tragplattenlinienverteiler 100 umfasst zu diesem Zweck einen Fördergurt 101, der erfindungsgemäß zumindest ein, bevorzugt eine Vielzahl von Führungselementen 111 umfasst, die sich quer zur Förderrichtung bevorzugt über die gesamte Breite M des Fördergurts 101 erstrecken. Die Tragplatten 120 umfassen erfindungsgemäß ein Kontaktelement 121, das mit wenigstens einem der Tragplatte 120 zugeordneten Führungselement 101 derart miteinander in Wechselwirkung treten kann, dass die Tragplatte 120 quer zur Förderrichtung T entsprechend der dargestellten Doppelpfeilrichtung entlang des Führungselements 111 verschoben werden kann. Dazu sind das Kontaktelement und das wenigstens eine Führungselement bevorzugt permanent in berührendem Kontakt.

Erfindungsgemäß ist vorgesehen, dass durch die Wechselwirkung des Führungselements 111 und des Kontaktelements 121 eine Tragplatte 120 so verschoben werden kann, dass sie zumindest teilweise über die äußere Begrenzung des Fördergurts 101 hinausragt. Dies kann umfassen, dass entlang der hier dargestellten Ebene bei maximaler Auslenkung einer Tragplatte 120 gesehen von der Mitte des Fördergurts 101 aus, der Abstand eines Punktes der Tragplatte zur Mitte des Fördergurts 101 größer ist als die Hälfte der maximalen Ausdehnung (der Breite) M des Fördergurts 101 quer zur Förderrichtung T.

Um den Bewegungsspielraum einer Tragplatte zu begrenzen, kann das oder jedes Führungselement oder eine sonstige Komponente des Fördergurts wenigstens ein Sperrelement 112 und 113 umfassen, die bevorzugt möglichst weit entfernt von der Mitte des Fördergurts 101 angeordnet sind. Dieses Sperrelement kann physisch so ausgestaltet sein, dass die Bewegung der Tragplatte über dieses Sperrelement hinaus gesehen von der Mitte des Fördergurts 101 verhindert wird. Beispielsweise kann es sich dabei um eine Verdickung des Führungselements 111 handeln, sodass das Kontaktelement 121 diese nicht passieren kann. Alternativ oder zusätzlich zu dem Sperrelement kann auch ein Blockieren der Bewegung einer Tragplatte 120 quer zur Förderrichtung T bspw. durch ein an den Fördergurt 101 angrenzenden Antriebsgurt 151 bzw. 152 realisiert werden.

Der Antriebsgurt kann so mit dem Fördergurt 101 verbunden sein, dass er eine Antriebskraft die von bspw. einem Antriebselement 190 (bspw. einem Kettenantrieb) auf den Antriebsgurt 151 bzw. 152 übertragen wird, auf den Fördergurt überträgt. Alternativ können der oder die Antriebsgurte auch als Kettenantriebe ausgestaltet sein, die direkt Antriebskraft auf den Fördergurt übertragen.

Wie in der Figur 1 bereits dargestellt, kann vorgesehen sein, dass eine Tragplatte 120 über die Begrenzung des Fördergurts 101 hinaus in einen Bereich des Antriebsgurts verbracht werden kann (siehe Position 122).

Hiermit wird die für das Verschieben der Tragplatten 120 quer zur Förderrichtung zur Verfügung stehende Breite des Fördergurts 101 vergrößert, sodass die Tragplatten auch über die Abmessungen des Fördergurts 101 hinaus verteilt werden können. Dies bietet den Vorteil, dass die Spuren 142 und 143 (hier lediglich beispielhaft zwei, es sind auch mehr als zwei Spuren denkbar) sich im Wesentlichen über die gesamte Breite des Fördergurts 101 erstrecken können. Insbesondere kann der Abstand einer äußersten Spur 143, auf die die Tragplatten 120 mit dem Tragplattenlinienverteiler 100 verteilt werden können, einen Abstand D zur äußeren Begrenzung des Fördergurts 101 aufweisen, der kleiner ist als die halbe maximale Ausdehnung B einer Tragplatte quer zur Förderrichtung T. Wird eine Tragplatte in eine solche Spur 143 geführt, erstreckt sie sich zumindest teilweise über die Begrenzung des Fördergurts 101 hinaus.

Damit steht für das Verteilen der Tragplatten eine Breite quer zur Förderrichtung T des Fördergurts zur Verfügung, die gleich M-2D ist. Da D kleiner als die Hälfte der Breite B einer Tragplatte 120 ist, ist dieser Wert größer als M-B, was die maximal zur Verfügung stehende Abmessung quer zur Förderrichtung des Fördergurts 101 ist, wenn sich eine Tragplatte 120 nicht über die Abmessungen des Fördergurts 101 hinausbewegen bzw. darüber hinaus verschoben werden kann.

Dies erlaubt das Bereitstellen mehrerer Spuren bei gleichbleibender Breite M des Fördergurts quer zur Förderrichtung T oder bei gegebener Anzahl von Spuren eine kompaktere Ausgestaltung des Fördergurts, was insgesamt Material und Gewicht einspart, sodass der Tragplattenlinienverteiler kompakter und effizienter ausgeführt werden kann, da weniger Energie zu seinem Betrieb erforderlich ist.

Um ein Verteilen der Tragplatten auf die verschiedenen Spuren 142 und 143 zu realisieren, kann eine Führung 140 gesehen von der Transportebene aus unterhalb der Führungselemente und Tragplatten 120 vorgesehen sein. In diese Führung 140 kann ein zweites Führungselement, das mit der jeweiligen Tragplatte physisch verbunden sein kann, eingreifen und bei Bewegen der Tragplatten entlang des Fördergurts in Förderrichtung T kann die Führung 140 bspw. durch eine geeignete Schaltweiche, wie sie aus dem Stand der Technik grundsätzlich bekannt ist, ein Verteilen der Tragplatten 120 von einem einspurigen Bereich 141 in den mehrspurigen Bereich mit den mehreren Spuren 142 und 143 realisieren.

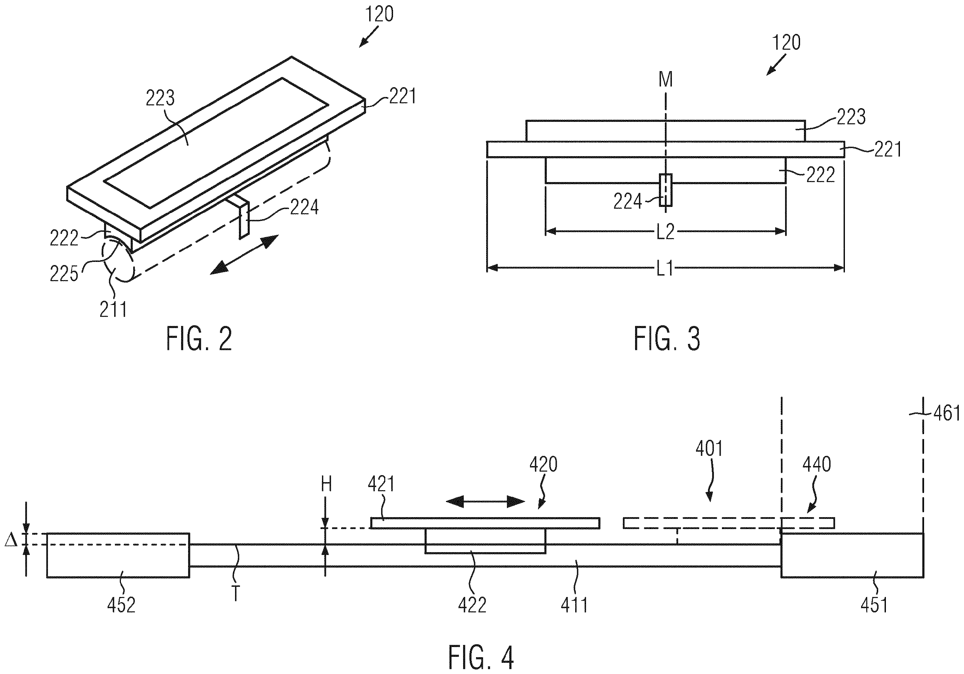

Die Figuren 2 und 3 zeigen Ausführungsformen einer Tragplatte 120.

In der in Figur 2 dargestellten Ausführungsform umfasst die Tragplatte einen Tragplattenkörper 121, an dem das Kontaktelement 222 angeordnet ist. Bevorzugt erstreckt sich das Kontaktelement auf einer Seite des Tragplattenkörpers 221, die der Seite gegenüberliegt, auf dem ein Fördergut vom Tragplattenkörper aufgenommen werden kann, insbesondere auf einer Unterseite des Tragplattenkörpers 221.

In der hier gezeigten Ausführungsform erstreckt sich ausgehend von dem Kontaktelement 222 das zweite Führungselement 224, dass in die zur Figur 1 bereits beschriebene Führung 140 eingreifen kann, um die Verteilung von Tragplatten auf die mehreren Spuren 142 und 143 zu realisieren. Das zweite Führungselement kann insbesondere als Eingriffselement oder Bolzen ausgestaltet sein und erstreckt sich, wenn es an dem Kontaktelement angeordnet ist, in einen Bereich, in dem das Kontaktelement nicht mit dem Führungselement 211 (in Figur 2 gestrichelt dargestellt) in physischem Kontakt ist. Beispielsweise kann sich das zweite Führungselement 224 in Förderrichtung oder entgegen der Förderrichtung ausgehend vom Kontaktelement 222 erstrecken.

In der hier dargestellten Ausführungsform umfasst das Kontaktelement 222 eine Kontaktfläche 225, die mit dem wenigstens einen Führungselement 211 in physischen Kontakt treten kann. In der gezeigten Ausführungsform ist das Führungselement als Rohr, insbesondere als Rundrohr mit bspw. kreisförmigem oder elliptischem Querschnitt ausgestaltet und die Kontaktfläche 225 des Kontaktelements 222 weist eine korrespondierende Form auf. Es kann vorgesehen sein, dass das Kontaktelement 222 das Führungselement 211 zumindest teilweise umgreift. Im Falle der Ausgestaltung des Führungselements als Rundrohr bspw. kann die Kontaktfläche 225 so ausgestaltet sein, dass sie einen Winkelbereich entlang des Umfangs des Führungselements 211 überdeckt, der größer als 180° ist. Hierdurch wird verhindert, dass insbesondere bei einem Zurückführen der Tragplatte die Tragplatte von dem Führungselement 211 herunterfällt. Das Kontaktelement 222 kann das Führungselement 211 auch vollständig umschließen, sodass das Kontaktelement 222 bspw. eine Öffnung aufweist, durch die das Führungselement 211 hindurchragen kann. Dadurch wird ein sicherer Halt gewährleistet.

Während hier lediglich die Wechselwirkung zwischen einem Kontaktelement und einem Führungselement pro Tragplatte beschrieben wird, kann in jeder beschriebenen Ausführungsform auch vorgesehen sein, dass das Kontaktelement einer Tragplatte stets mit zwei zugeordneten Führungselementen in berührendem Kontakt ist. Dies kann insbesondere bei Ausgestaltung der Führungselemente mit rundem Querschnitt vorteilhaft sein, um ein Verkippen der Tragplatte um die Längsachse des Führungselements zu verhindern, ist auf solche Ausführungsformen jedoch nicht beschränkt. Hierzu kann das Kontaktelement dann zwei entsprechend geformte Kontaktflächen umfassen oder jede Tragplatte kann als zwei Kontaktelemente mit einer entsprechenden Kontaktfläche umfassend ausgestaltet sein.

Das Führungselement 211 muss nicht als Rundrohr ausgestaltet sein. Es kann auch einen beliebigen anderen Querschnitt, bspw. viereckig oder dreieckig aufweisen. Das Kontaktelement und insbesondere die Kontaktfläche 225 des Kontaktelements ist dann entsprechend geformt.

Das Führungselement 211 kann als Hohlrohr ausgestaltet sein, dessen Wandstärke so gewählt werden kann, dass ein zuverlässiger Transport der Tragplatte 120 möglich ist, auch wenn darauf Fördergut transportiert wird. Insbesondere kann das Führungselement 211 so dimensioniert sein, dass es verformungsfrei die Tragplatte 120 und ein zusätzliches auf der Tragplatte lastendes Gewicht von bis zu 5 Kilogramm tragen kann.

Das Kontaktelement 222 kann mit dem Tragplattenkörper 221 lösbar oder fest verbunden sein. Eine lösbare Verbindung ist als solche Verbindung zu verstehen, die zerstörungsfrei gelöst und erneut hergestellt werden kann. Bspw. kann das Kontaktelement 222 mit dem Tragplattenkörper 221 verschraubt sein. Das Kontaktelement 222 kann auch in den Tragplattenkörper 221 integriert sein, sodass der Tragplattenkörper und das Kontaktelement einstückig ausgebildet sind. Am Beispiel der Figur 2 kann der Tragplattenkörper 221 bspw. eine Einkerbung in Form der Kontaktfläche 225 entsprechend der bisher beschriebenen Ausführungsformen umfassen.

Auf der dem Kontaktelement 222 gegenüberliegenden Seite des Tragplattenkörpers 221 kann optional ein Reibelement 223 angeordnet sein. Das Reibelement kann insbesondere eine aufgeraute Oberfläche umfassen oder eine sonstige Oberfläche, die bevorzugt einen hohen Haftreibungskoeffizienten relativ zum Material des zu befördernden Förderguts aufweist. Bspw. kann das Reibelement eine Oberfläche aus Gummi umfassen oder aus Gummi bestehen.

Bevorzugt kann das Reibelement wenigstens 50% der Fläche des Tragplattenkörpers einnehmen bzw. bedecken. Besonders bevorzugt beträgt die Fläche des Reibelements wenigstens 75% oder wenigstens 85% der Oberfläche des Tragplattenkörpers, auf der das Reibelement angeordnet ist. In diesen Ausführungsformen nimmt das Reibelement praktisch die gesamte Oberfläche des Tragplattenkörpers ein bzw. bedeckt diese, sodass ein zuverlässiges Transportieren von Fördergut mit der Tragplatte gewährleistet ist.

Es kann vorgesehen sein, dass das Reibelement 223 in den Tragplattenkörper 221 eingelassen ist und die Oberfläche des Reibelements 223, auf der Fördergut transportiert wird, mit der Oberfläche des Tragplattenkörpers bündig abschließt oder der Oberfläche des Tragplattenkörpers gegenüber nach unten (in Richtung des Kontaktelements 222) versetzt ist oder nach oben (in die entgegengesetzte Richtung) versetzt ist. Bevorzugt sind das Reibelement 222 und der Tragplattenkörper 221 formschlüssig und/oder materialschlüssig miteinander verbunden, sodass bevorzugt keine Spalten zwischen dem Reibelement 223 und dem Tragplattenkörper 221 zumindest entlang einer Oberfläche, auf der Fördergut befördert wird, vorhanden sind. Hierdurch wird die Akkumulation von Verunreinigungen vermieden. Das Reibelement 223 kann mit dem Tragplattenkörper fest verbunden sein (bspw. verklebt) oder auf diesem lösbar angeordnet sein, bspw. durch ein oder mehrere Paare von Magneten, sodass ein Entfernen des Reibelements und ein Austausch bei Verschleiß möglich ist, ohne dass die gesamte Tragplatte ausgetauscht werden muss.

Figur 3 zeigt eine Schnittansicht der Tragplatte 120 in einer Richtung quer zur Förderrichtung T. In dieser Abbildung wurde das Führungselement 211 weggelassen.

Bevorzugt erstreckt sich der Tragplattenkörper 221 über eine Länge L1, die bspw. 30cm oder 50cm betragen kann. Das Kontaktelement 222 kann so angeordnet sein, dass es symmetrisch zu einer Mittelachse M des Tragplattenkörpers 221 verläuft, sich also von dieser aus gesehen in der Darstellung der Figur 3 nach links und rechts (quer zur Förderrichtung) um die gleiche Länge erstreckt. Um einen sicheren Halt an dem Führungselement 211 zu ermöglichen, kann vorgesehen sein, dass das Kontaktelement 222 eine Länge L2 in Richtung des Führungselements aufweist, die wenigstens 10% der Länge L1 beträgt. Hierdurch wird verhindert, dass die Tragplatte bei einem Verschieben entlang des Führungselements 211 relativ zur Förderrichtung verdreht wird. Die Länge L2 kann auch bis zu 20% oder bis zu 30% oder mehr der Länge L1 betragen. Da die Ausdehnung des Kontaktelements 222 die verbleibende Länge, über die sich die Tragplatte über die äußere Begrenzung des Fördergurts hinaus erstrecken kann, begrenzt, kann vorgesehen sein, dass die Länge L2 zumindest kleiner als 50% der Länge L1 beträgt.

Figur 4 zeigt eine Schnittansicht eines Tragplattenlinienverteilers 400 in einer Ebene quer zur Förderrichtung. Die grundsätzliche Ausgestaltung des Tragplattenlinienverteilers 400 kann der der bisher beschriebenen Ausführungsformen entsprechen. Insbesondere kann das Führungselement 411 und/oder die Tragplatte 420 sowie das Kontaktelement 422 analog zu den bisher beschriebenen Ausführungsformen der Figuren 1 bis 3 ausgestaltet sein.

In der hier dargestellten Ausführungsform befinden sich links und rechts (zumindest jedoch auf einer Seite) Antriebsgurte 451 und 452, die mit dem Fördergurt 401 so verbunden sind, dass sie eine Antriebskraft auf den Fördergurt übertragen können. Dabei sind Ausführungsformen bevorzugt, in denen auf den gegenüberliegenden Seiten des Fördergurts 411 jeweils ein Antriebsgurt 451 und 452 angeordnet ist, um Antriebskraft auf den Fördergurt zu übertragen. Dies verhindert oder reduziert zumindest auf den Fördergurt übertragende Drehmomente.

Die Antriebsgurte können so ausgestaltet sein, dass sie in einer Richtung senkrecht zu einer Transportebene T, die bspw. durch die Oberseite des Fördergurts 401 oder die Führungselemente 411 definiert sein kann, eine Ausdehnung oder Höhendifferenz zum Fördergurt Δ besitzen. Sie ragen somit weiter in einen Bereich oberhalb der Transportebene T hinein, als der Fördergurt 401.

In einer Ausführungsform kann vorgesehen sein, dass das Kontaktelement 422 gemessen von der Oberseite (wie in Figur 4 dargestellt) des Führungselements 411 eine Ausdehnung oder Höhe H aufweist, die zumindest gleich der Ausdehnung Δ ist, sodass die Unterseite des Tragplattenkörpers 421 einen Abstand zu der Transportebene T aufweist, der wenigstens gleich, bevorzugt geringfügig größer (wenigstens 2mm oder wenigstens 4mm) als die Ausdehnung Δ des Antriebsgurts gesehen von dieser Transportebene T aus ist.

Hierdurch wird gewährleistet, dass eine Tragplatte 420 quer zur Förderrichtung entlang des Führungselements 411 so verschoben werden kann, dass ein Teil der Tragplatte entsprechend der gestrichelt dargestellten Position 440 in einen Bereich 461 oberhalb des Antriebsgurts 451 eindringen kann. Die Tragplatte 420 wird somit über die Begrenzungen des Fördergurts 401 hinausbewegt und es steht im Wesentlichen die gesamte Breite des Fördergurts zur Verfügung um bspw. mit der in Figur 1 beschriebenen Führung ein Verteilen der Transportplatten auf verschiedene Spuren realisieren.

## Patentansprüche

1. Tragplattenlinienverteiler (100) zum Verteilen von Fördergut von einer Spur (141) auf mehrere Spuren(142, 143), der Tragplattenlinienverteiler (100) umfassend einen Fördergurt (101) und wenigstens eine auf dem Fördergurt angeordnete und quer zu einer Förderrichtung (T) des Fördergurts beweglich angeordnete Tragplatte (120), wobei der Fördergurt (101) ein quer zur Förderrichtung verlaufendes Führungselement (111) umfasst und die Tragplatte (120) ein Kontaktelement (121) umfasst, das mit dem Führungselement (111) in berührendem Kontakt ist, wobei das Kontaktelement (121) und das Führungselement (111) so ausgestaltet sind, dass die Tragplatte (12) zumindest teilweise über eine Begrenzung des Fördergurtes (101) hinaus quer zur Förderrichtung (T) verschoben werden kann.

2. Tragplattenlinienverteiler (100) nach Anspruch 1, wobei das Kontaktelement (121) das Führungselement (111) zumindest teilweise umgreift.

3. Tragplattenlinienverteiler (100) nach Anspruch 1 oder 2, wobei das Führungselement (111) ein Rohr ist oder ein Rohr umfasst.

4. Tragplattenlinienverteiler (100) nach einem der Ansprüche 1 bis 3, wobei der Fördergurt (101) an der Begrenzung mit einem Antriebsgurt (151, 152) verbunden ist und wobei die Tragplatte (120) über die Begrenzung des Fördergurtes (101) hinaus quer zur Förderrichtung (T) so verschoben werden kann, dass die Tragplatte (120) sich zumindest teilweise in einen durch den Antriebsgurt begrenzten Bereich (461) erstreckt.

5. Tragplattenlinienverteiler (100) nach Anspruch 4, wobei der Antriebsgurt (151, 152) eine größere Ausdehnung (Δ) in einer Richtung senkrecht zu einer Förderebene des Fördergurtes (101) aufweist als der Fördergurt und wobei das Kontaktelement (121) eine Ausdehnung (H) in der Richtung aufweist, die größer als die Ausdehnung (Δ) des Antriebsgurts ist.

6. Tragplattenlinienverteiler (100) nach einem der Ansprüche 1 bis 5, wobei das Kontaktelement (121) eine Ausdehnung (L2) quer zur Förderrichtung (T) aufweist, die kleiner als eine Ausdehnung (L1) der Tragplatte (120) quer zur Förderrichtung (T) ist und/oder wobei das Kontaktelement (121) eine Ausdehnung quer zur Förderrichtung (T) aufweist, die wenigstens 20% oder wenigstens 30% oder wenigstens 50% einer Ausdehnung der Tragplatte (120) quer zur Förderrichtung (T) beträgt.

7. Tragplattenlinienverteiler (100) nach einem der Ansprüche 1 bis 6, wobei der Fördergurt (101) und/oder das Führungselement (111) ein Sperrelement (112, 113) umfassen, das eine Bewegung der Tragplatte (120) quer zur Förderrichtung und gesehen von einer Mitte des Fördergurtes (101) aus über das Sperrelement (112, 113) hinaus blockiert.

8. Tragplattenlinienverteiler (100) nach einem der Ansprüche 1 bis 7, wobei die Tragplatte (220) einen Tragplattenkörper (221) und ein auf einer von dem Fördergurt (101) wegweisenden Oberfläche des Tragplattenkörpers (221) angeordnetes Reibelement (223) umfasst.

9. Tragplattenlinienverteiler (100) nach Anspruch 8, wobei das Reibelement (223) eine Fläche in einer Ebene parallel zu einer Förderebene des Fördergurtes (T) aufweist, die wenigstens 50% oder wenigstens 75% oder wenigstens 85% der Oberfläche des Tragplattenkörpers (221), auf der das Reibelement (223) angeordnet ist, beträgt.

10. Tragplattenlinienverteiler (100) nach Anspruch 8 oder 9, wobei das Reibelement (223) und der Tragplattenkörper (221) über eine formschlüssige und/oder materialschlüssige Verbindung miteinander verbunden sind.

11. Tragplattenlinienverteiler (100) nach einem der Ansprüche 7 bis 10, wobei die Verbindung eine permanente Verbindung oder eine lösbare Verbindung ist.

12. Tragplattenlinienverteiler (100) nach einem der Ansprüche 1 bis 11, wobei die Tragplatte (220) ein zweites Führungselement (224) umfasst und wobei der Tragplattenlinienverteiler (100) eine Führung (140) zum Führen der wenigstens einen Tragplatte (220) mittels des zweiten Führungselements (224) umfasst, wobei die Führung (!40) einen einspurigen Bereich (141) und einen in Förderrichtung stromab angeordneten mehrspurigen Bereich umfasst und die Tragplatte von dem einspurigen Bereich in eine Spur (142, 143) des mehrspurigen Bereichs verteilt werden kann.

13. Tragplattenlinienverteiler (100) nach Anspruch 12, wobei ein Abstand (D) einer gesehen von einer Mitte des Fördergurts (101) aus äußersten Spur (143) des mehrspurigen Bereichs zu einer Begrenzung des Fördergurts in einer Richtung quer zur Förderrichtung (T) kleiner als die Hälfte der Ausdehnung (B) der Tragplatte in der Richtung quer zur Förderrichtung (T) ist.

14. Tragplattenlinienverteiler (100) nach Anspruch 12 oder 13, wobei das zweite Führungselement (224) mit dem Kontaktelement (222) verbunden oder an dem Kontaktelement angeordnet ist.

15. Verfahren zum Verteilen von Fördergut von einer Spur (141) auf mehrere Spuren (142, 143) mit einem Tragplattenlinienverteiler (100) gemäß einem der Ansprüche 1 bis 14, das Verfahren umfassend ein Transportieren von Fördergut auf der Tragplatte (120) und ein Verschieben der Tragplatte (120) quer zur Förderrichtung (T) des Fördergurtes (101), um das Fördergut von einer Spur (141) auf eine der mehreren Spuren (142, 143) zu verteilen.
